# EUROPÄISCHE PATENTSCHRIFT

(11) **EP 2 418 055 B1**
(45) Veröffentlichungstag und Bekanntmachung des Hinweises auf die Patenterteilung: **03.01.2018**
(21) Anmeldenummer: 11006367.4
(22) Anmeldetag: 03.08.2011
(51) Int. Cl.: B27B 17/08, B27B 17/10

(54) **Handgeführtes Arbeitsgerät**
Manually operated work device
Appareil pour utilisation manuelle

(30) Priorität: 11.08.2010 DE 102010033978
(43) Veröffentlichungstag der Anmeldung: 15.02.2012
(73) Patentinhaber: Andreas Stihl AG & Co. KG, 71336 Waiblingen (DE)
(72) Erfinder: Hittmann, Markus, 71384 Weinstadt (DE); Schenk, Ralf, 71384 Weinstadt (DE); Rethaber, Achim, 70732 Stuttgart (DE)
(74) Vertreter: Reinhardt, Annette

(56) Entgegenhaltungen:
- EP-A2- 2 415 570
- DE-A1- 10 353 921
- US-A- 3 849 884
- US-A- 4 053 980
- US-A1- 2006 000 097

## Beschreibung

Die Erfindung betrifft ein handgeführtes Arbeitsgerät der im Oberbegriff des Anspruchs 1 angegebenen Gattung.

Aus der DE 10 2005 047 885 A1 ist ein handgeführtes Arbeitsgerät, nämlich eine Kettensäge, bekannt, an deren Fliehkraftkupplung eine Antriebshülse festgelegt ist. Die Antriebshülse weist eine Außenverzahnung auf. Die Verzahnung besitzt an der der Kupplungstrommel zugewandten Seite einen Auslauf für das Fräswerkzeug, das die Verzahnung herstellt. Dieser Fräserauslauf vergrößert die axiale Baugröße des Arbeitsgeräts.

Aus der DE 103 53 921 A1 ist eine Betätigungsvorrichtung für eine Klauenkupplung einer Motorkettensäge bekannt. Die Motorkettensäge besitzt ein Getrieberad, welches mit einer Kupplungshälfte verbunden ist. DE 103 53 921 A1 offenbart ein handgeführtes Arbeitsgerät gemäß dem Oberbegriff des Anspruchs 1. Der Erfindung liegt die Aufgabe zugrunde, ein handgeführtes Arbeitsgerät der gattungsgemäßen Art zu schaffen, das eine geringe Baugröße aufweist.

Diese Aufgabe wird durch ein handgeführtes Arbeitsgerät mit den Merkmalen des Anspruchs 1 gelöst.

Durch die zweiteilige Ausführung des Antriebsritzels kann der bei einteiligen Antriebsritzeln benötigte Fräserauslauf entfallen, so dass die axiale Baugröße des Antriebsritzels und damit die gesamte Baugröße des Arbeitsgeräts verringert werden kann. Da die Baugröße und insbesondere die axiale Baugröße bei handgeführten Arbeitsgeräten kritisch sind und so klein wie möglich sein sollen, bewirkt hier bereits eine Bauraumeinsparung im Millimeterbereich deutliche Vorteile. Die verringerte Baulänge des Antriebsritzels wirkt sich außerdem auf die Verringerung der auf das Antriebsritzel und die Verbindungsstelle an der Kupplungstrommel wirkenden Biegekräfte aus. Durch die einfach zu realisierende zweiteilige Ausbildung des Antriebsritzels können deutliche Vorteile erzielt werden.

Vorteilhaft besitzt das erste Einzelteil einen Abschnitt mit einem größten Durchmesser, wobei sich der funktionale Bereich der Verzahnung über den gesamten Abschnitt erstreckt. Dadurch kann die Verzahnung durch einfaches Überfräsen des gesamten Abschnitts hergestellt werden. Der funktionale Bereich der Verzahnung ist dabei der Bereich, in der die Verzahnung ihre volle Tiefe besitzt. Bereiche, in denen nicht die gesamte Zahnhöhe der Verzahnung gegeben ist, wie beispielsweise der Auslauf des Fräswerkzeugs zählen nicht zum funktionalen Bereich der Verzahnung. Vorteilhaft ist an dem zweiten Einzelteil ein Lagersitz für ein Lager des Antriebsritzels ausgebildet. Der Außendurchmesser des zweiten Einzelteils am Lagersitz entspricht dabei insbesondere mindestens dem größten Durchmesser des ersten Einzelteils. Durch die große Ausbildung des Lagersitzes wird ein stabiler Gesamtaufbau erreicht. Durch die Ausbildung des Antriebsritzels mit zwei Einzelteilen ist es möglich, den größten Durchmesser des Antriebsritzels und den Außendurchmesser des Lagersitzes etwa gleich groß auszubilden oder den Lagersitz größer auszubilden, ohne die Baugröße aufgrund eines zusätzlich benötigten Fräserauslaufes zu vergrößern.

Eine einfache, dauerhaft feste Verbindung zwischen den beiden Einzelteilen ergibt sich, wenn das erste und das zweite Einzelteil miteinander verlötet sind. Vorteilhaft erfolgt die Verlötung über einen zwischen den beiden Einzelteilen eingelegten Lotring. Hierzu ist vorgesehen, dass zwischen dem ersten und dem zweiten Einzelteil eine geschlossene Aufnahme für den Lotring gebildet ist. In die Aufnahme kann der Lotring bei der Fertigung eingelegt und anschließend durch entsprechende Erhitzung aufgeschmolzen werden, so dass sich eine Verlötung der beiden Einzelteile ergibt. Um die Lage der Einzelteile zueinander während der Fertigung zu sichern und die Belastung der Lötstelle im Betrieb zu verringern, ist vorgesehen, dass das erste Einzelteil einen Zapfen besitzt, der in eine Vertiefung am zweiten Einzelteil ragt.

Vorteilhaft weist das Antriebsritzel an der der Kupplung zugewandten Seite Eingriffsmittel für ein Werkzeug auf. Das Eingriffsmittel ist insbesondere eine Innensechskantöffnung, so dass über ein Sechskantwerkzeug an dem Antriebsritzel eine definierte Last auf den Motor eingebracht werden kann. Dadurch kann während der Produktion oder im Service eine definierte Einstellung des Motors erfolgen. Im Betrieb kann die Innensechskantöffnung beispielsweise durch einen Gummistopfen verschlossen sein. Eine einfache Herstellbarkeit ergibt sich, wenn die Innensechskantöffnung ein Abschnitt einer Durchgangsöffnung im ersten Einzelteil ist.

Vorteilhaft ist die Kupplung eine Fliehkraftkupplung, und das Abtriebsteil der Kupplung ist eine Kupplungstrommel. Um eine formschlüssige Sicherung des Antriebsritzels an der Kupplungstrommel zu erreichen, ist vorgesehen, dass das zweite Einzelteil einen Zapfen besitzt, der in eine Öffnung in der Kupplungstrommel ragt. Das Antriebsritzel ist mit der Kupplungstrommel vorteilhaft stoffschlüssig durch Löten oder dgl. verbunden. Vorteilhaft besitzt das Arbeitsgerät ein Exzentergetriebe, dessen Zahnrad mit dem Antriebsritzel in Eingriff ist. Das Antriebsritzel stellt damit eine direkte Verbindung zwischen der Kupplungstrommel und dem Exzentergetriebe her. Das Arbeitsgerät ist insbesondere eine Heckenschere mit mindestens einem Messerbalken, und der Antriebsmotor ist vorteilhaft ein Verbrennungsmotor.

Ein Ausführungsbeispiel der Erfindung wird im Folgenden anhand der Zeichnung erläutert. Es zeigen:
- Fig. 1: eine perspektivische Darstellung einer Heckenschere,
- Fig. 2: eine Explosionsdarstellung des Heckenscherengetriebes,
- Fig. 3: eine schematische Darstellung des Antriebs der Heckenschere,
- Fig. 4: einen Schnitt durch das Getriebe der Heckenschere,
- Fig. 5: eine Seitenansicht des Antriebsritzels,
- Fig. 6: einen Schnitt entlang der Linie VI-VI in Fig. 5.

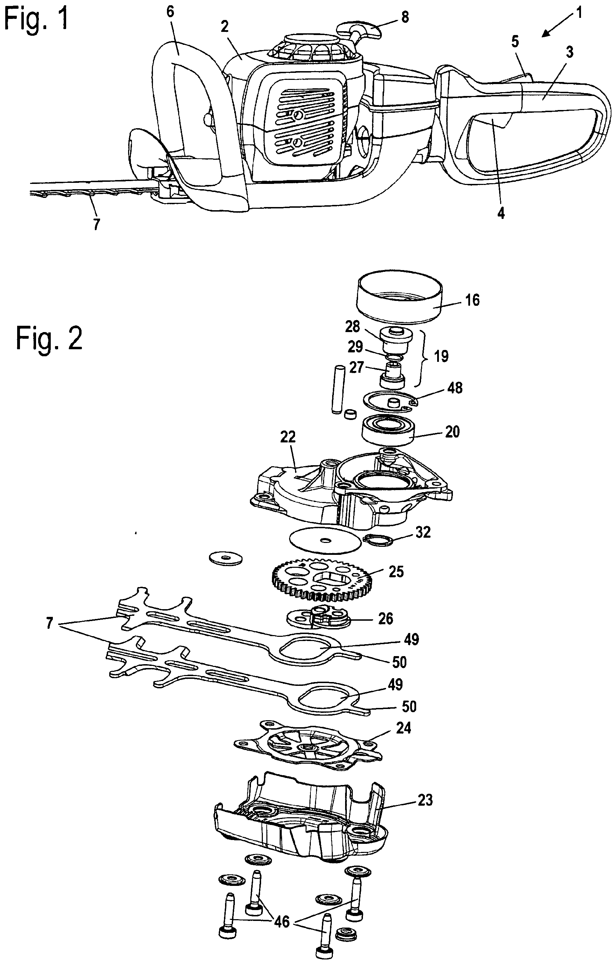

Fig. 1 zeigt als Ausführungsbeispiel für ein handgeführtes Arbeitsgerät eine Heckenschere 1. Die vorgeschlagene Gestaltung eines Antriebsritzels kann vorteilhaft auch bei anderen Arbeitsgeräten wie beispielsweise Motorsägen, Trennschleifern, Freischneidern oder dgl. eingesetzt werden. Eine besonders vorteilhafte Gestaltung ergibt sich beim Einsatz in einer Heckenschere 1. Die Heckenschere 1 besitzt ein Gehäuse 2, an dem ein hinterer Handgriff 3 festgelegt ist. Am hinteren Handgriff 3 sind ein Gashebel 4 zur Bedienung eines im Gehäuse 2 angeordneten Antriebsmotors sowie eine Gashebelsperre 5 schwenkbar gelagert. Aus dem Gehäuse 2 ragt ein Anwerfgriff 8 zur Bedienung einer Starteinrichtung des Antriebsmotors. An der dem Handgriff 3 abgewandten Seite ragen zwei Messerbalken 7 nach vorne, die gegenläufig angetrieben sind. An der den Messerbalken 7 zugewandten Seite des Gehäuses 2 ist ein Griffbügel 6 zum Führen der Heckenschere 1 angeordnet.

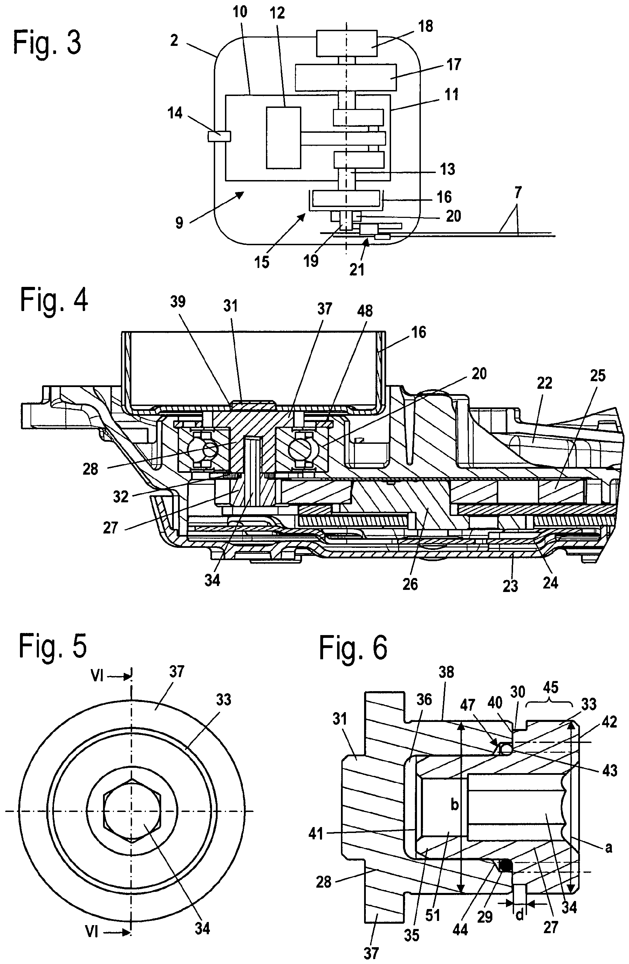

Der Aufbau des Antriebs der Heckenschere 1 ist im Einzelnen in Fig. 3 schematisch gezeigt. Der Anwerfgriff 8 (Fig. 1) ist Teil einer Starteinrichtung 18 zum Anwerfen des Antriebsmotors 9, der als Verbrennungsmotor, insbesondere als Zweitaktmotor oder als gemischgeschmierter Viertaktmotor ausgebildet ist. Der Antriebsmotor 9 besitzt einen Zylinder 10, in dem ein Kolben 12 hin- und hergehend gelagert ist. Im Zylinder 10 ist ein vom Kolben 12 begrenzter Brennraum ausgebildet, in den eine Zündkerze 14 ragt. Der Kolben 12 treibt eine Kurbelwelle 13 rotierend an, die in einem Kurbelgehäuse 11 drehbar gelagert ist. Auf der Kurbelwelle 13 ist drehfest ein Lüfterrad 17 angeordnet, an dem die Starteinrichtung 18 eingreift. An der gegenüberliegenden Seite des Kurbelgehäuses 11 ist eine Kupplung 15 angeordnet, die als Fliehkraftkupplung ausgebildet ist. Die Kupplung 15 besitzt eine Kupplungstrommel 16, an der ein Antriebsritzel 19 festgelegt ist. Das Antriebsritzel 19 ist über ein Lager 20, das als Wälzlager ausgebildet ist, drehbar gelagert. Das Antriebsritzel 19 treibt ein Exzentergetriebe 21 an, das wiederum die Messerbalken 7 gegenläufig zueinander und hin- und hergehend antreibt.

Fig. 2 zeigt den Aufbau des Antriebs der Heckenschere 1 im Einzelnen. Wie Fig. 2 zeigt, besitzt das Antriebsritzel 19 ein erstes Einzelteil 27 und ein zweites Einzelteil 28, das an der Kupplungstrommel 16 festgelegt ist. Zwischen den beiden Einzelteilen 27 und 28 wird bei der Herstellung des Antriebsritzels 19 ein Lotring 29 eingelegt, der die beiden Einzelteile 27 und 28 fest und stoffschlüssig miteinander verbindet. Die Heckenschere 1 besitzt eine Getriebegehäuseschale 22, die nach unten auf die dem Antriebsmotor 9 abgewandte Seite mit einem Getriebegehäusedeckel 23 verschlossen ist. Der Getriebegehäusedeckel 23 ist über vier Befestigungsschrauben 46 der Getriebegehäuseschale 22 gehalten. Benachbart zum Lager 20 ist ein Sicherungsring 32 angeordnet, der den Innenring des Lagers 20 in seiner Position hält. Ein weiterer Sicherungsring 48 sichert die Lage des Außenrings des Lagers 20 gegenüber der Getriebegehäuseschale 22. Das Antriebsritzel 19 treibt ein Zahnrad 25 an, in das ein Exzenternocken 26 eingreift. Das Zahnrad 25 bildet mit dem Exzenternocken 26 das Exzentergetriebe 21 (Fig. 3). Der Exzenternocken 26 greift in Öffnungen 49 der Messerbalken 7 ein. Zwischen dem Getriebegehäusedeckel 23 und den unteren Messerbalken 7 ist ein Halteblech 24 angeordnet, an dem sich die Messerbalken 7 mit Nasen 50 abstützen.

Wie die Schnittdarstellung in Fig. 4 zeigt, besitzt die Kupplungstrommel 16 eine Öffnung 39, in die ein Zapfen 31 des zweiten Einzelteils 28 des Antriebsritzels 19 ragt. Ein Bund 37 des zweiten Einzelteils 28 liegt an der Außenseite der Kupplungstrommel 16 an und stützt sich an dieser ab. Mit dem Bund 37 ist das Antriebsritzel 19 fest mit der Kupplungstrommel 16 verbunden, beispielsweise mit dieser verlötet oder verschweißt. Fig. 4 zeigt auch die Lage der Sicherungsringe 32 und 48 am Wälzlager 20.

Wie die Fig. 4 bis 6 zeigen, besitzt das Antriebsritzel 19 eine Durchgangsöffnung 51, die sich im ersten Einzelteil 27 von der ersten Stirnseite 41 des Einzelteils 27, die der Kupplungstrommel 16 und dem zweiten Einzelteil 28 zugewandt liegt, bis zur zweiten Stirnseite 42, die der Kupplungstrommel 16 abgewandt ist, erstreckt. An der Durchgangsöffnung 51 ist eine Innensechskantöffnung 34 ausgebildet, die sich ausgehend von der zweiten Stirnseite 42 über etwa zwei Drittel der Durchgangsöffnung 51 erstreckt. Der Übergang der Innensechskantöffnung 34 in die zweite Stirnseite 42 ist angefast. Über die Innensechskantöffnung 34 kann über ein Sechskantwerkzeug ein definiertes Moment am Antriebsritzel 19 aufgebracht werden, das dem Antriebsmoment des Antriebsmotors 9 entgegenwirkt. Dadurch ist eine definierte Einstellung des Antriebsmotors 9 bei der Herstellung und im Service möglich.

Wie Fig. 6 zeigt, besitzt das zweite Einzelteil 28 eine Vertiefung 36, in die ein Zapfen 35 des ersten Einzelteils 27 ragt. Im Ausführungsbeispiel besitzt der Zapfen 35 einen kreisförmigen Außenquerschnitt und die Vertiefung 36 einen kreisförmigen Innenquerschnitt. Es können jedoch auch andere Querschnittsformen, die eine drehfeste Verbindung zwischen den beiden Einzelteilen 27 und 28 herstellen, vorteilhaft sein. Das zweite Einzelteil 28 besitzt einen Bund 37. Benachbart zum Bund 37 ist am Außenumfang des zweiten Einzelteils 28 ein Lagersitz 38 ausgebildet, auf dem der Innenring des Lagers 20 angeordnet ist. Der Lagersitz 38 besitzt einen Außendurchmesser b.

Zwischen dem ersten Einzelteil 27 und dem zweiten Einzelteil 28 ist eine Nut 30 gebildet, in die der Sicherungsring 32 ragt. Die Nut 30 besitzt eine Breite d, die nur geringfügig größer als die Breite des Sicherungsrings 32 ist. Das erste Einzelteil 27 besitzt einen größten Durchmesser a, der sich über einen Abschnitt 45 des ersten Einzelteils 27 erstreckt. Am Außenumfang im Abschnitt 45 ist eine Verzahnung 33 angeordnet, die mit dem Zahnrad 25 zusammenwirkt. Der funktionale Bereich der Verzahnung 33 erstreckt sich über den gesamten Abschnitt 45. Der funktionale Bereich der Verzahnung 33 ist dabei der Bereich, in dem die Verzahnung ihre volle Tiefe und Zahnhöhe besitzt. Benachbart zur zweiten Stirnseite 42 ist die Verzahnung 33 angefast. Im Bereich der Fase ist nicht die volle Zahnhöhe gegeben, so dass der Bereich der Fase nicht zum Abschnitt 45 zählt. Auch der Bereich der Nut 30 zählt nicht zum funktionalen Bereich der Verzahnung 33, da hier ebenfalls nicht die volle Zahnhöhe gegeben ist. Der Außendurchmesser a im Abschnitt 45 entspricht höchstens dem Außendurchmesser b des Lagersitzes 38. Der Außendurchmesser b im Lagersitz 38 ist damit größer oder etwa gleich groß wie der Außendurchmesser a des Abschnitts 45. Aufgrund der zweiteiligen Ausbildung des Antriebsritzels 19 wird trotz dieser Größenverhältnisse kein Fräserauslauf zwischen dem funktionalen Bereich der Verzahnung 33 und dem Lagersitz 38 benötigt. Im Bereich der Verzahnung 33 ist an der dem zweiten Einzelteil 28 zugewandten Seite lediglich die Nut 30 für den Sicherungsring 32 vorgesehen. Bei anderer Gestaltung der axialen Sicherung kann sich der funktionale Bereich der Verzahnung 33 auch bis an die Stirnseite 40 des zweiten Einzelteils 28 erstrecken.

Die Verzahnung 33 erstreckt sich mit verringerter Höhe über den Bereich der Nut 30 bis an einen Absatz 43, an dem der Durchmesser des ersten Einzelteils 27 sich stark verringert und in den Zapfen 35 übergeht. Der Absatz 43 liegt an der dem ersten Einzelteil 27 zugewandten Stirnseite 40 des zweiten Einzelteils 28 an. Die Vertiefung 36, in die der Zapfen 35 ragt, erstreckt sich von der Stirnseite 40 in axialer Richtung ins Innere des zweiten Einzelteils 28. Am Übergang der Stirnseite 40 in die Vertiefung 36 ist eine umlaufende, ringförmige Vertiefung 44 ausgebildet, die zusammen mit dem Absatz 43 eine Aufnahme 47 begrenzt. Die Aufnahme 47 ist vollständig geschlossen ausgebildet. In der Aufnahme 47 ist der Lotring 29 angeordnet, der die beiden Einzelteile 27 und 28 nach dem Verlöten, also dem Verflüssigen des Lotrings 29, miteinander verbindet. Der Lotring 29 ist in Fig. 6 vor dem Verlöten gezeigt. Der Lotring 29 ist als geschlitzter Ring ausgebildet.

Es kann auch vorgesehen sein, dass sich der Abschnitt 45 mit dem größten Durchmesser a bis an die Stirnseite 40 des zweiten Einzelteils 28 erstreckt.

## Patentansprüche

1. Handgeführtes Arbeitsgerät mit einem Antriebsmotor (9), der über eine Kupplung (15) ein Antriebsritzel (19) zum Antrieb mindestens eines Werkzeugs antreibt,
wobei das Antriebsritzel (19) drehfest mit einem Abtriebsteil der Kupplung (15) verbunden ist,
**dadurch gekennzeichnet, dass** das Antriebsritzel (19) aus mindestens zwei fest miteinander verbundenen Einzelteilen (27, 28) aufgebaut ist, wobei ein erstes Einzelteil (27) eine Verzahnung (33) trägt und wobei ein zweites Einzelteil (28) mit der Kupplung (15) verbunden ist.

2. Arbeitsgerät nach Anspruch 1,
**dadurch gekennzeichnet, dass** das erste Einzelteil (27) einen Abschnitt (45) mit einem größten Durchmesser (a) besitzt und dass der funktionale Bereich der Verzahnung (33) sich über den gesamten Abschnitt (45) erstreckt.

3. Arbeitsgerät nach Anspruch 2,
**dadurch gekennzeichnet, dass** an dem zweiten Einzelteil (28) ein Lagersitz (38) für ein Lager (20) des Antriebsritzels (19) ausgebildet ist.

4. Arbeitsgerät nach Anspruch 3,
**dadurch gekennzeichnet, dass** der Außendurchmesser (b) des zweiten Einzelteils (28) am Lagersitz (38) mindestens dem größten Durchmesser (a) des ersten Einzelteils (27) entspricht.

5. Arbeitsgerät nach einem der Ansprüche 1 bis 4,
**dadurch gekennzeichnet, dass** das erste Einzelteil (27) und das zweite Einzelteil (28) miteinander verlötet sind.

6. Arbeitsgerät nach Anspruch 5,
**dadurch gekennzeichnet, dass** zwischen dem ersten Einzelteil (27) und dem zweiten Einzelteil (28) eine geschlossene Aufnahme (47) für einen Lotring (29) gebildet ist.

7. Arbeitsgerät nach Anspruch 6,
**dadurch gekennzeichnet, dass** die Aufnahme (47) durch einen Absatz (43) am ersten Einzelteil (27) und eine ringförmige Vertiefung (44) am zweiten Einzelteil (28) begrenzt ist.

8. Arbeitsgerät nach einem der Ansprüche 1 bis 7,
**dadurch gekennzeichnet, dass** das erste Einzelteil (27) einen Zapfen (35) besitzt, der in eine Vertiefung (36) am zweiten Einzelteil (28) ragt.

9. Arbeitsgerät nach einem der Ansprüche 1 bis 8,
**dadurch gekennzeichnet, dass** das Antriebsritzel (19) an der der Kupplung (15) abgewandten Seite Eingriffsmittel für ein Werkzeug aufweist.

10. Arbeitsgerät nach Anspruch 9,
**dadurch gekennzeichnet, dass** das Eingriffsmittel eine Innensechskantöffnung (34) ist.

11. Arbeitsgerät nach Anspruch 10,
**dadurch gekennzeichnet, dass** die Innensechskantöffnung (34) ein Abschnitt einer Durchgangsöffnung (51) im ersten Einzelteil (27) ist.

12. Arbeitsgerät nach einem der Ansprüche 1 bis 11,
**dadurch gekennzeichnet, dass** die Kupplung (15) eine Fliehkraftkupplung ist und dass das Abtriebsteil der Kupplung (15) eine Kupplungstrommel (16) ist.

13. Arbeitsgerät nach Anspruch 12,
**dadurch gekennzeichnet, dass** das zweite Einzelteil (28) des Antriebsritzels (19) einen Zapfen (31) besitzt, der in eine Öffnung (39) in der Kupplungstrommel (16) ragt.

14. Arbeitsgerät nach einem der Ansprüche 1 bis 13,
**dadurch gekennzeichnet, dass** das Arbeitsgerät ein Exzentergetriebe (21) besitzt, dessen Zahnrad (25) mit dem Antriebsritzel (19) in Eingriff ist.

15. Arbeitsgerät nach einem der Ansprüche 1 bis 14,
**dadurch gekennzeichnet, dass** das Arbeitsgerät eine Heckenschere (1) mit mindestens einem Messerbalken (7) ist.

16. Arbeitsgerät nach einem der Ansprüche 1 bis 15,
**dadurch gekennzeichnet, dass** der Antriebsmotor ein Verbrennungsmotor ist.

## Claims

1. Hand-guided working implement, comprising a drive motor (9) driving a drive pinion (19) via a clutch (15) for driving at least one tool, the drive pinion (19) being non-rotatably connected to an output part of the clutch (15),
**characterised in that** the drive pinion (19) is made up of at least two permanently joined individual parts (27, 28), a first individual part (27) supporting a toothing (33) and a second individual part (28) being connected to the clutch (15).

2. Working implement according to claim 1,
**characterised in that** the first individual part (27) has a section (45) with a maximum diameter (a), and **in that** the functional region of the toothing (33) extends over the entire section (45).

3. Working implement according to claim 2,
**characterised in that** a bearing seat (38) for a bearing (20) of the drive pinion (19) is formed on the second individual part (28).

4. Working implement according to claim 3,
**characterised in that** the outer diameter (d) of the second individual part (28) corresponds at least to the maximum diameter (a) of the first individual part (27) at the bearing seat (38).

5. Working implement according to any of claims 1 to 4,
**characterised in that** the first individual part (27) and the second individual part (28) are soldered to each other.

6. Working implement according to claim 5
**characterised in that** a closed receptacle (47) for a solder ring (29) is formed between the first individual part (27) and the second individual part (28).

7. Working implement according to claim 6,
**characterised in that** the receptacle (47) is bounded by a shoulder (43) on the first individual part (27) and an annular indentation (44) on the second individual part (28).

8. Working implement according to any of claims 1 to 7,
**characterised in that** the first individual part (27) has a pin (25), which projects into a recess (36) on the second individual part (28).

9. Working implement according to any of claims 1 to 8,
**characterised in that** the drive pinion (19) has engagement means for a tool on the side remote from the clutch (15).

10. Working implement according to claim 9,
**characterised in that** the engagement means is a hexagon socket (34).

11. Working implement according to claim 10,
**characterised in that** the hexagon socket (34) is a section of a through-opening (51) in the first individual part (27).

12. Working implement according to any of claims 1 to 11,
**characterised in that** the clutch (15) is a centrifugal clutch and the output part of the clutch (15) is a clutch drum (16).

13. Working implement according to claim 12,
**characterised in that** the second individual part (28) of the drive pinion (19) has a pin (31), which projects into an opening (30) in the clutch drum (16).

14. Working implement according to any of claims 1 to 13,
**characterised in that** the working implement has an eccentric transmission (21), the gear (25) of which is in engagement with the drive pinion (19).

15. Working implement according to any of claims 1 to 14,
**characterised in that** the working implement is a hedge trimmer (1) with at least one cutting bar (7).

16. Working implement according to any of claims 1 to 15,
**characterised in that** the drive motor is an internal combustion engine.

## Revendications

1. Appareil tenu à la main, avec un moteur d'entraînement (9) qui entraîne par l'intermédiaire d'un accouplement (15) un pignon d'entraînement (19) pour entraîner au moins un outil, le pignon d'entraînement (19) étant relié, fixe en rotation, à un élément de sortie de l'accouplement (15),
**caractérisé en ce que** le pignon d'entraînement (19) se compose d'au moins deux éléments individuels (27, 28) reliés de manière fixe, un premier élément individuel (27) portant une denture (33), et un second élément individuel (28) étant relié à l'accouplement (15).

2. Appareil selon la revendication 1,
**caractérisé en ce que** le premier élément individuel (27) comporte une section (45) avec un plus grand diamètre (a), et **en ce que** la zone fonctionnelle de la denture (33) s'étend sur toute la section (45).

3. Appareil selon la revendication 2,
**caractérisé en ce qu'**il est prévu, formé sur le second élément individuel (28), un appui de palier (38) pour un palier (20) du pignon d'entraînement (19).

4. Appareil selon la revendication 3,
**caractérisé en ce que** le diamètre extérieur (b) du second élément individuel (28) prévu sur l'appui de palier (38) correspond au moins au plus grand diamètre (a) du premier élément individuel (27).

5. Appareil selon l'une des revendications 1 à 4,
**caractérisé en ce que** le premier élément individuel (27) et le second élément individuel (28) sont reliés par soudage.

6. Appareil selon la revendication 5,
**caractérisé en ce qu'**entre le premier élément individuel (27) et le second élément individuel (28) est formé un logement fermé (47) pour un anneau de soudure (29).

7. Appareil selon la revendication 6,
**caractérisé en ce que** le logement (47) est limité par un épaulement (43) sur le premier élément individuel (27) et par un creux annulaire (44) sur le second élément individuel (28).

8. Appareil selon l'une des revendications 1 à 7,
**caractérisé en ce que** le premier élément individuel (27) comporte un tourillon (35) qui pénètre dans un creux (36) prévu sur le second élément individuel (28).

9. Appareil selon l'une des revendications 1 à 8,
**caractérisé en ce que** le pignon d'entraînement (19) présente, sur son côté opposé à l'accouplement (15), un moyen de prise pour un outil.

10. Appareil selon la revendication 9,
**caractérisé en ce que** le moyen de prise est une ouverture à six pans creux (34).

11. Appareil selon la revendication 10,
**caractérisé en ce que** l'ouverture à six pans creux (34) est une section d'une ouverture de passage (51) dans le premier élément individuel (27).

12. Appareil selon l'une des revendications 1 à 11,
**caractérisé en ce que** l'accouplement (15) est un accouplement centrifuge, et **en ce que** l'élément de sortie de l'accouplement (15) est un tambour d'accouplement (16).

13. Appareil selon la revendication 12,
**caractérisé en ce que** le second élément individuel (28) du pignon d'entraînement (19) comporte un tourillon (31) qui pénètre dans une ouverture (39) prévue dans le tambour d'accouplement (16).

14. Appareil selon l'une des revendications 1 à 13,
**caractérisé en ce qu'**il comporte une transmission à excentrique (21) dont la roue dentée (25) est en prise avec le pignon d'entraînement (19).

15. Appareil selon l'une des revendications 1 à 14,
**caractérisé en ce qu'**il s'agit d'un taille-haie (1) avec au moins une barre de coupe (7).

16. Appareil selon l'une des revendications 1 à 15,
**caractérisé en ce que** le moteur d'entraînement est un moteur à combustion interne.
